# EUROPÄISCHE PATENTANMELDUNG

(11) **EP 2 428 263 A1**
(43) Veröffentlichungstag der Anmeldung: **14.03.2012**
(21) Anmeldenummer: 11181005.7
(22) Anmeldetag: 13.09.2011
(51) Int. Cl.: B01D 46/00, F01N 11/00

(54) **Filter-Schlauchsystem**

(30) Priorität: 13.09.2010 DE 102010040670
(71) Anmelder: MAHA Maschinenbau Haldenwang GmbH & Co. KG, 87490 Haldenwang (DE)
(72) Erfinder: Die Erfindernennung liegt noch nicht vor
(74) Vertreter: MERH-IP Matias Erny Reichl Hoffmann

(57) **Zusammenfassung**

Die Erfindung betrifft ein Filter-Schlauchsystem zum lösbaren Verbinden eines Filters mit einem Schlauch, insbesondere ein Filter-Schlauchsystem zum Einsatz in Verbindung mit einem Abgasmessgerät. Das Filter-Schlauchsystem umfasst einen Schlauch 3, einen Schlauchverbinder 4, einen Filter 1 mit einem Anschlussabschnitt 2 und einer Filterkupplungsbuchse 30, 60 mit einer ersten Öffnung 31, 61 zur Aufnahme des Anschlussabschnitts 2 und einer zweiten Öffnung 32, 62 zur Aufnahme des Schlauchverbinders 4, wobei der Anschlussabschnitt 2 des Filters 1 mit der ersten Öffnung 31, 61 der Filterkupplungsbuchse 30, 60 eine lösbare Steckverbindung bildet und der Schlauch 3 über den Schlauchverbinder 4 mit der zweiten Öffnung in der Buchse 30, 60 verbunden ist.

## Beschreibung

Die Erfindung betrifft ein Filter-Schlauchsystem, insbesondere ein Filter-Schlauchsystem, das an ein Abgasmessgerät angeschlossen ist und einen schnellen Austausch des Filters ermöglicht, ohne die Schläuche zu beschädigen.

Bei der Abgasmessung von Kraftfahrzeugen kommen Abgasmessgeräte zum Einsatz, die über eine Abgassonde, die in das Auspuffrohr des zu untersuchenden Fahrzeugs gebracht wird, beispielsweise den Anteil der Gase CO, CO₂, HC, O₂, NO oder Opazität und Massenkonzentration im Fahrzeugabgas messen. Um die Abgasmessgeräte vor Verschmutzungen zu schützen, werden verschiedene Inline-Filter und "Inline-Absorber", wie beispielsweise Inline-Papier-, Aktiv-Kohle- oder HEPA-Filter, eingesetzt. Diese Filter sind in der Regel freiliegend außerhalb des Abgasmessgeräts angebracht und müssen regelmäßig verschleißbedingt ausgewechselt werden. Bei den aus dem Stand der Technik bekannten Filter-Schlauchsystemen wird der Inline-Filter bzw. der Inline-Absorber an die das Messgas bzw. Abgas führenden Schläuche angeschlossen, indem die Schlauchenden direkt auf die Filteranschlussstücke aufgeschoben werden. Bei den in der Abgasmessung gängigen Unterdruck- und Niederdrucksystemen reicht die entstehende Haftreibung des Schlauchmaterials, z.B. Gummi, aus, um eine ausreichend feste Verbindung zu erzeugen.

Ein Problem dieser Filter-Schlauchsysteme ist, dass ein verschleißbedingter Wechsel der Filter oftmals zu einer Beschädigung der Schläuche führt. So können die Schlauchenden während der typischen Nutzungsdauer von beispielsweise einem halben Jahr oftmals an der Kontaktstelle mit dem Filter durch die in der Abgasmessung häufig auftretenden Schmutzpartikel verkleben. Das Abziehen des verklebten Schlauchkontaktstücks vom Filter führt dann oftmals zu mechanischen Belastungen, die den Schlauch beschädigen, beispielsweise durch Risse, und einen Austausch des beschädigten Schlauchstücks erfordern. Der Austausch des in das Innere eines Abgasmessgeräts führenden Schlauches erfordert jedoch das Öffnen des Gehäuses des Abgasmessgeräts und damit die Zerstörung des Eichsiegels, da Abgasmessgeräte in der Regel für den Prüfbetrieb geeicht sind. Eine derartige Beschädigung der Messgasschläuche führt daher zu unverhältnismäßig hohen Folgekosten durch Austausch des Schlauches und einer erforderlichen erneuten Eichung des Messgeräts.

Es ist deshalb eine Aufgabe der vorliegenden Erfindung, ein Filter-Schlauchsystem, insbesondere ein Filter-Schlauchsystem zur Verwendung mit einem Abgasmessgerät, bereitzustellen, das einen schnellen Austausch des Filters ermöglicht, ohne die Schläuche zu beschädigen. Diese Aufgabe wird durch ein Filter-Schlauchsystem gemäß den Merkmalen des Patentanspruchs 1 gelöst. Die abhängigen Patentansprüche betreffen vorteilhafte Ausgestaltungen der Erfindung.

Das erfindungsgemäße Filter-Schlauchsystem zum lösbaren Verbinden eines Filters mit einem Schlauch verfügt über einen Schlauch, einen Schlauchverbinder, einen Filter und eine Filterkupplungsbuchse. Vorzugsweise handelt es sich bei dem Filter um einen Inline-Filter oder einen Inline-Absorber, der am Filtereingang und am Filterausgang jeweils einen Anschlussabschnitt aufweist. Diese Anschlussstücke sind vorzugsweise als zylinderförmige dünne Hohlkörper ausgebildet und vom Durchmesser derart angepasst, um in ein Schlauchanschlussstück aufgenommen werden zu können. Ein Schlauchverbinder im Sinne dieser Erfindung ist ein kurzes Rohrstück, das zur Verbindung von Schläuchen dient. Dieses wird in die Enden der Schläuche gesteckt und gewährleistet eine dichte Verbindung. Eine Verbindung mittels Schlauchverbinder im Sinne der Erfindung ist nicht lösbar durch die beispielsweise gerippten oder gewellten Enden, um ein Abrutschen des Schlauches zu verhindern. Ein Schlauchverbinder kann auch einen Endbereich mit einem Gewinde aufweisen, um eine Schraubverbindung auszubilden. Die erfindungsgemäße Filterkupplungsbuchse ist mit einer ersten Öffnung zur Aufnahme des Anschlussabschnitts und einer zweiten Öffnung zur Aufnahme des Schlauchverbinders versehen. Vorzugsweise ist die erste Öffnung mit einem integrierten Dichtelement versehen, beispielsweise einem O-Ring, Radialwellendichtring oder einem ähnlichen Dichtelement, um die Dichtheit des Übergangs vom Schlauch zum Filter sicherzustellen. Bei dem erfindungsgemäßen Filter-Schlauchsystem bildet der Anschlussabschnitt des Filters mit der ersten Öffnung der Filterkupplungsbuchse eine lösbare Steckverbindung und der Schlauch ist über den Schlauchverbinder mit der zweiten Öffnung der Filterkupplungsbuchse verbunden. Die Filterkupplungsbuchse ist vorzugsweise aus Plastik oder aus einem Material mit einem zum Schlauchmaterial vergleichsweise geringen Haftreibungskoeffizienten bzw. Haftreibungszahl. Das erfindungsgemäße Filter-Schlauchsystem gewährleistet die Dichtheit des Übergangs vom Schlauch zum Filter und ermöglicht gleichzeitig ein schnelles Wechseln des Filters ohne Werkzeug und ohne dass der Schlauch beschädigt wird, da die erfindungsgemäße Filterkupplungsbuchse den Schlauch vom Filteranschlussstück trennt und durch die niedrige Haftreibung ein schnelles Herausziehen des Filters aus der Filterkupplungsbuchse ermöglicht.

Weiterhin kann die erste Öffnung der Filterkupplungsbuchse eine eingefräste Vertiefung zur Aufnahme des Dichtelements aufweisen. Dies ermöglicht eine kostengünstige Integration des Dichtelements in die Filterkupplungsbuchse, ohne dass das Dichtelement beim Ein- und Ausstecken des Filters beschädigt wird oder verrutscht. Weiterhin kann die zweite Öffnung der Filterkupplungsbuchse ein eingeschnittenes Gewinde zur Aufnahme des Schlauchverbinders aufweisen, wobei der Schlauchverbinder an einem Endbereich ein entsprechendes Gegengewinde aufweist. Dadurch wird der Schlauchverbinder verrutschsicher mit der Filterkupplungsbuchse verbunden. Eine derart ausgestaltete Filterkupplungsbuchse verfügt über die vorteilhafte Festigkeit der aus dem Stand der Technik bekannten Filter-Schlauchverbindungen und vermeidet zugleich die daraus entstehenden Nachteile, dass eine zu hohe Festigkeit oder eine verschmutzungsbedingte Verklebung zu einer Beschädigung beim Wechseln des Schlauches führen kann.

Weiterhin kann die Filterkupplungsbuchse zwei miteinander verbundene Hohlräume aufweisen, um die erste mit der zweiten Öffnung zu verbinden, wobei der Durchmesser des Hohlraums, der an der ersten Öffnung beginnt, größer ist als der Durchmesser des Hohlraums, der an der zweiten Öffnung beginnt. Dadurch entsteht im Übergang der beiden Hohlräume ein Arretiervorsprung, um eine definierte Einschubtiefe des Filteranschlussabschnitts zu gewährleisten. Die beiden Hohlräume können parallel hintereinander oder auch zueinander senkrecht verlaufen. Im letzteren Fall sind die erste und die zweite Öffnung nicht an gegenüberliegenden Seiten der Filterkupplungsbuchse, sondern an benachbarten Seiten der Filterkupplungsbuchse angebracht. Hierdurch kann ein Filter-Schlauchsystem in I-Form oder in L-Form bereitgestellt werden.

Vorzugsweise ist die Filterkupplungsbuchse zylinderförmig oder quaderförmig ausgebildet. Vorzugsweise ist der Durchmesser der Filterkupplungsbuchse zwei- bis viermal so groß wie der Querschnitt des Filteranschlussstücks. Weiter vorzugsweise ist der Durchmesser ca. dreimal so groß. Dies ermöglicht eine ausreichende Stabilität der Filterkupplungsbuchse und gleichzeitig eine gute Handhabung der Buchse, da diese bequem mit einer Hand umgriffen werden kann. Weiterhin können der Filter und der Schlauch mittels zusätzlicher Klemmen an der Filterkupplungsbuchse befestigt werden. Dies ist insbesondere vorteilhaft, wenn das Filter-Schlauchsystem bei höheren Drücken zum Einsatz kommt.

Weiterhin kann die Filterkupplungsbuchse an der Seite der ersten Öffnung Bohrungen aufweisen. Vorzugsweise sind vier Bohrungen in den Eckbereichen der Vorderseite der Filterkupplungsbuchse angebracht. Dies ermöglicht ein einfaches Verschrauben der Filterkupplungsbuchse mit einer Blechwand, beispielsweise einer Gehäusewand eines Abgasmessgeräts. Dies ermöglicht ein Abgasmessgerät mit einem Filter-Schlauchsystem, bei dem die Filterkupplungsbuchse über die Bohrungen an die Innenseite eines Gehäuses des Abgasmessgeräts geschraubt ist. Weiterhin kann das Gehäuse an der Stelle der ersten Öffnung der Filterkupplungsbuchse eine Gehäuseöffnung aufweisen, durch die der Filter des Filter-Schlauchsystems an der Außenseite des Gehäuses des Abgasmessgeräts durch die Gehäuseöffnung in die Filterkupplungsbuchse gesteckt ist. Dadurch kann die Filterkupplungsbuchse im Inneren des Abgasmessgeräts montiert werden und ermöglicht gleichzeitig ein einfaches und schnelles Wechseln des an der Außenseite des Abgasmessgerätgehäuses angebrachten Filters. Weiterhin kann das Filter-Schlauchsystem der Erfindung auch als freiliegendes Filter-Schlauchsystem mit den gängigen Abgasmessgeräten verbunden werden.

Weiterhin kann die erfindungsgemäße lösbare Steckverbindung auf Basis der Filterkupplungsbuchse in verschiedenen Kombinationen mit einem Filter zu einem Filter-Schlauchsystem verbunden werden. Beispielsweise kann die erfindungsgemäße Filterkupplungsbuchse an einem Filter beidseitig, d.h. am Filtereingang und am Filterausgang, als Kupplungselement zwischen Filter und Schlauch angebracht werden. Weiterhin können beidseitig sowohl Filterkupplungsbuchsen mit den erfindungsgemäßen Hohlräumen in I-Form und/oder L-Form kombiniert werden. Weiterhin kann an einen Anschlussabschnitt des Filters eine Filterkupplungsbuchse ohne Schraubverbindung als freiliegendes Kupplungselement angebracht werden und auf der gegenüberliegenden Seite eine verschraubte Filterkupplungsbuchse angebracht werden, um den Filter an einer Seite fest mit einer Wand oder dem Abgasmessgerät zu verschrauben. Die Kombination zweier Filterkupplungsbuchsen einmal als verschraubte Ausführungsform und einmal als unverschraubte Ausführungsform, die an gegenüberliegenden Anschlusstücken des Filters angebracht sind, erlaubt somit eine vorteilhafte Befestigung des Filters und vermeidet dadurch ein versehentliches Beschädigen des Filters durch darauf tretende Arbeiter oder Arbeiter, die über den freiliegenden Filter stolpern.

Das beschriebene Filter-Schlauchsystem löst das zuvor beschriebene Problem der Schlauchbeschädigung bei einem Filterwechsel, das insbesondere, aber nicht ausschließlich bei der Abgasmessung auftritt und ist auch anhand dieser Anwendung erläutert. Jedoch ist die Erfindung nicht auf den Einsatz bei der Abgasmessung beschränkt, sondern kann vorteilhaft als schnell lösbares Filter-Schlauchsystem in verschiedensten Anwendungsfeldern eingesetzt werden.

Bevorzugte Ausführungsformen der vorliegenden Erfindung werden im Folgenden beispielhaft und exemplarisch unter Bezugnahme auf die beigefügten Zeichnungen näher beschrieben.
**Fig. 1A und Fig. 1B** zeigen ein aus dem Stand der Technik bekanntes Filter-Schlauchsystem in einer Perspektiv- und einer Seitenansicht;
**Fig. 2A, Fig. 2B** **und** **Fig. 2C** zeigen eine schematische Seitenansicht, eine Seitenansicht im Schnitt und eine Perspektivansicht eines Ausführungsbeispiels des erfindungsgemäßen Filter-Schlauchsystems;
**Fig. 3A** **und** **Fig. 3B** zeigen eine Perspektivansicht und eine Seitenansicht im Schnitt eines Ausführungsbeispiels des erfindungsgemäßen Filter-Schlauchsystems;
**Fig. 4A, Fig. 4B, Fig. 4C** **und** **Fig. 4D** zeigen eine Draufsicht, eine Schnittansicht, eine Frontansicht und eine Perspektivansicht eines Ausführungsbeispiels einer erfindungsgemäßen Filterkupplungsbuchse;
**Fig. 5A****,** **Fig. 5B** **und** **Fig. 5C** zeigen eine Seitenansicht, eine Perspektivansicht und eine Seitensicht im Schnitt eines Ausführungsbeispiels eines erfindungsgemäßen Filter-Schlauchsystems;
**Fig. 6A****,** **Fig. 6B** **und** **Fig. 6C** zeigen eine Seitenansicht, eine Perspektivansicht und eine Seitenansicht im Schnitt eines weiteren Ausführungsbeispiels des erfindungsgemäßen Filter-Schlauchsystems; und
**Fig. 7A****,** **Fig. 7B, Fig. 7C und Fig. 7D** zeigen eine Perspektivansicht, eine Draufsicht, eine Frontansicht und eine Seitenansicht im Schnitt eines Ausführungsbeispiels einer Filterkupplungsbuchse des erfindungsgemäßen Filter-Schlauchsystems.

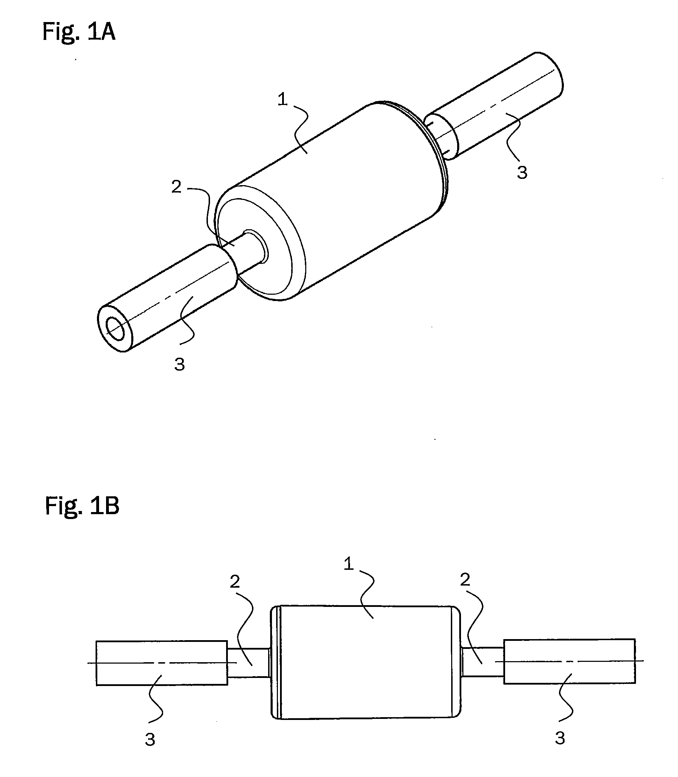

Die Fig. 1A und 1B zeigen ein aus dem Stand der Technik bekanntes Filter-Schlauchsystem, bei dem die Anschlussstücke 2 des Filters 1 direkt in die Schläuche 3 gesteckt werden. Dies führt oftmals mit der Zeit zum Verkleben des Schlauches 3 mit dem Filteranschlussstück 2 aufgrund von Verschmutzungen und der starken Haftreibung des Schlauchmaterials, so dass die mechanische Belastung beim Herunterziehen des Schlauches 3 vom Anschlussstück 2 zu Rissen oder anderen Beschädigungen des Schlauches führen kann.

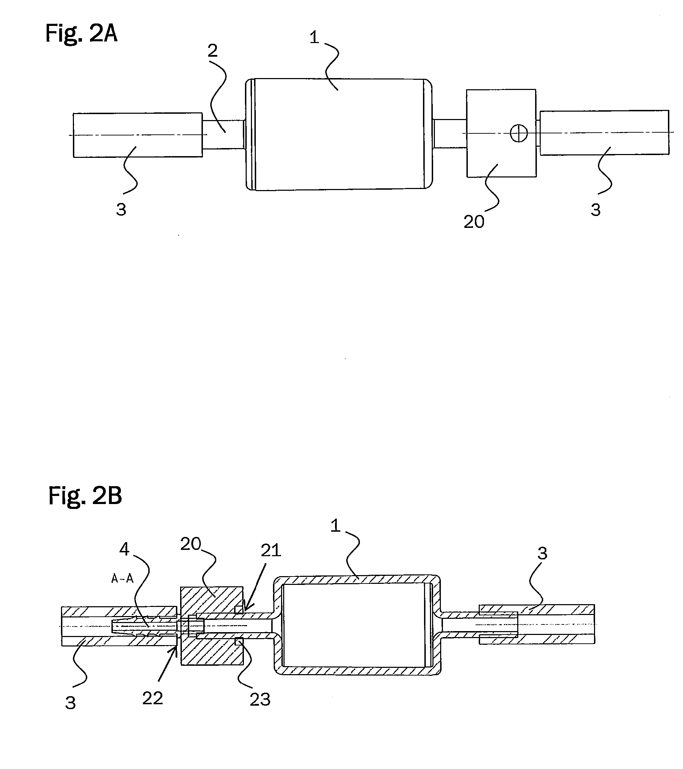

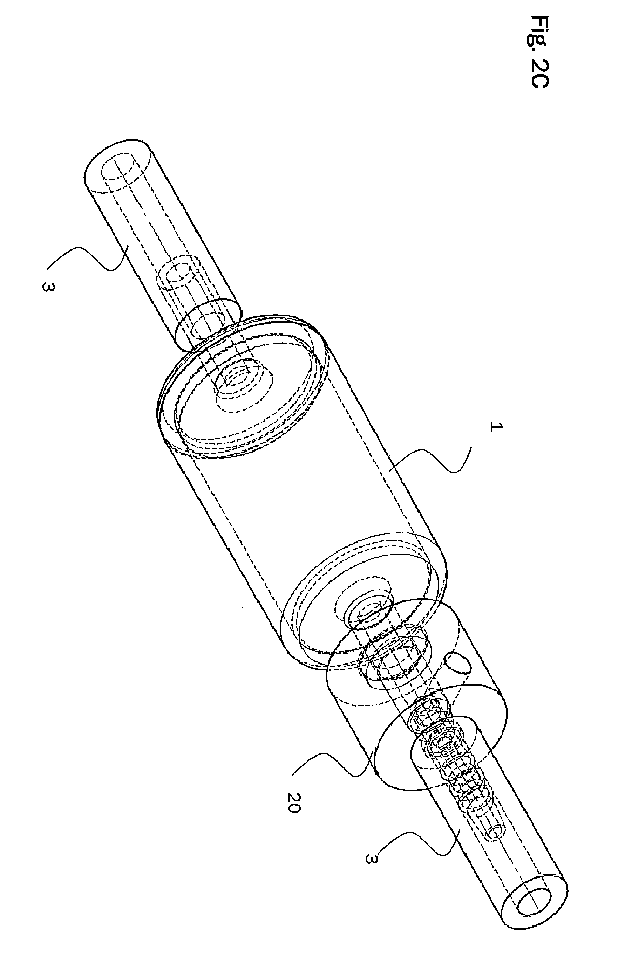

Die Fig. 2A, 2B und 2C zeigen in einer Seitenansicht, einer Seitenansicht im Schnitt und einer Perspektivansicht schematisch ein erstes Ausführungsbeispiel des erfindungsgemäßen Filter-Schlauchsystems. Bei dem erfindungsgemäßen Filter-Schlauchsystem kommt eine Filterkupplungsbuchse 20 aus Plastik zum Einsatz, die einen der zwei Anschlussabschnitte 2 des Filters 1 mit dem Schlauch 3 verbindet. Wie in der Schnittansicht in Fig. 2B schematisch illustriert, ist die erste Öffnung 21 der Filterkupplungsbuchse 20 mit einem integrierten Dichtring 23 versehen, um die Dichtheit des Übergangs von der Filterkupplungsbuchse 20 zum Filter 1 sicherzustellen. Der Dichtring 23 ist in eine eingefräste Vertiefung der Filterkupplungsbuchse 20 eingelegt. Die Filterkupplungsbuchse 20 verfügt an ihrer zweiten Öffnung 22 über ein eingeschnittenes Gewinde, in das ein Schlauchverbinder 4 eingedreht werden kann. Der Schlauchverbinder 4 ist ein kurzes Rohrstück, das die Filterkupplungsbuchse 20 mit dem Schlauch 3 verbindet. Der Schlauchverbinder 4 verfügt an seinem im Schlauch befindlichen Endbereich über mehrere Verdickungen, die sägezahnförmig ausgebildet sind, um einen festen Halt des Schlauches 3 zu gewährleisten. An seinem herausstehenden Ende verfügt der Schlauchverbinder 4 über ein Drehgewinde, um ihn in die zweite Öffnung 22 der Filterkupplungsbuchse 20 einzudrehen.

Die Filterkupplungsbuchse 20 verfügt über zwei miteinander verbundene zylinderförmige Hohlräume, um die erste 21 mit der zweiten 22 Öffnung zu verbinden. Dabei ist der Durchmesser des Hohlraums, der an der ersten Öffnung 21 beginnt, größer als der Durchmesser des Hohlraums, der an der zweiten Öffnung 22 beginnt. Dadurch entsteht am Übergang zwischen den beiden Hohlräumen mit unterschiedlichen Durchmessern eine Arretierstelle, die eine maximale Eindringtiefe für den eingesteckten Filteranschluss 2 festlegt.

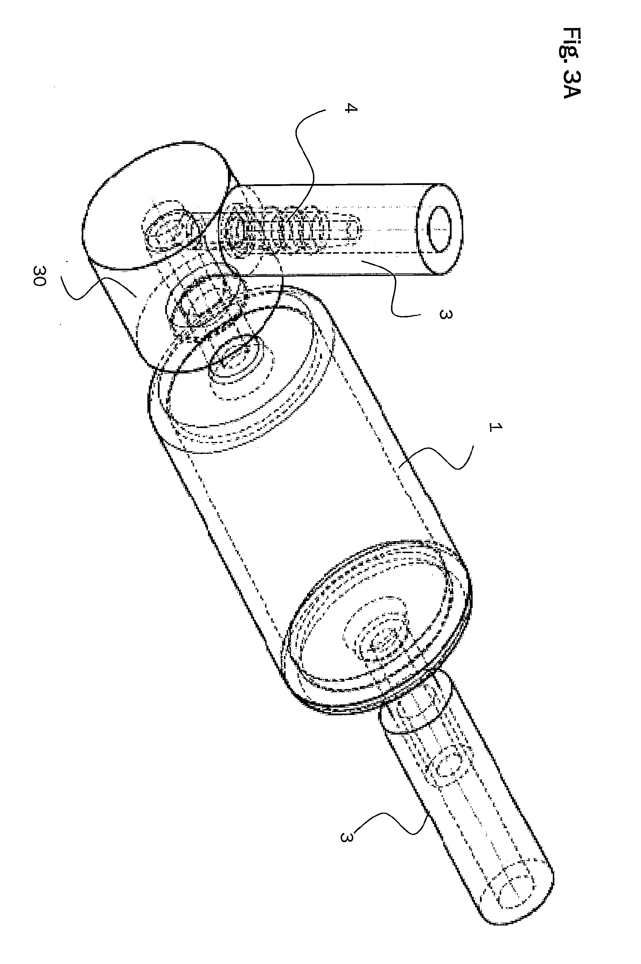

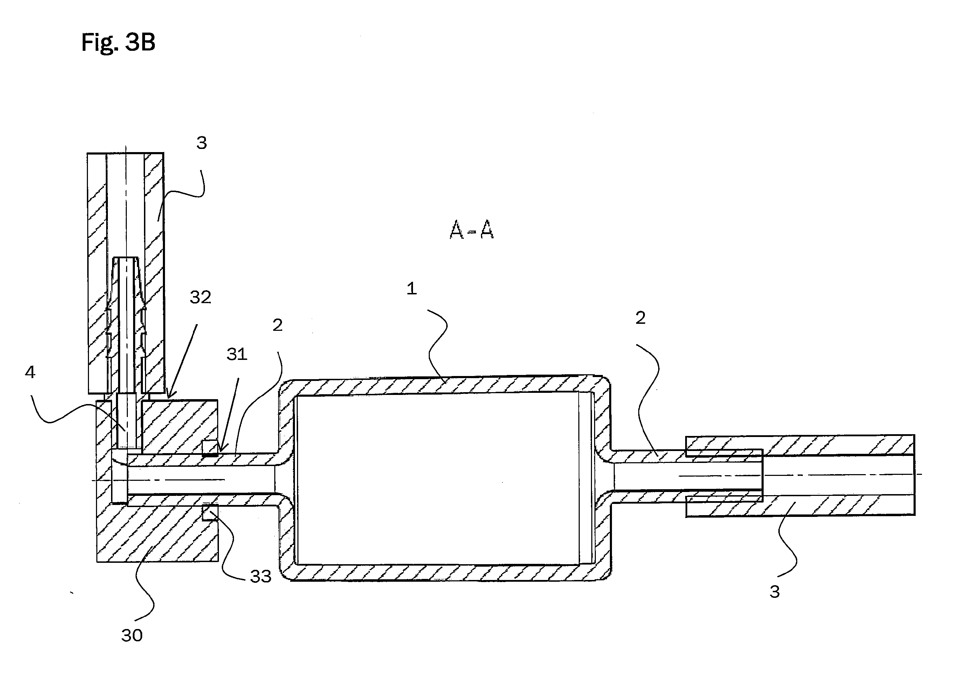

In den Fig. 3A und Fig. 3B ist schematisch ein weiteres Ausführungsbeispiel des Filter-Schlauchsystems illustriert, bei dem die Filterkupplungsbuchse ein L-förmiges Filter-Schlauchsystem ermöglicht, indem zwei zueinander im Wesentlichen senkrechte und miteinander verbundene zylinderförmige Hohlräume 33, 35 die erste Öffnung 31 mit der zweiten Öffnung 32 verbinden. Die in Fig. 3B in einer Schnittansicht gezeigte Filterkupplungsbuchse 30 weist wiederum filterseitig an ihrer ersten Öffnung 31 einen integrierten Dichtring 33 auf. An der gegenüberliegenden Seite des Filters 1 ist der Filter direkt mit einem Schlauch 3 verbunden. Selbstverständlich kann auch diese Schlauchverbindung durch eine erfindungsgemäße Schlauchverbindung mit einer Filterkupplungsbuchse 20 oder 30 ersetzt werden.

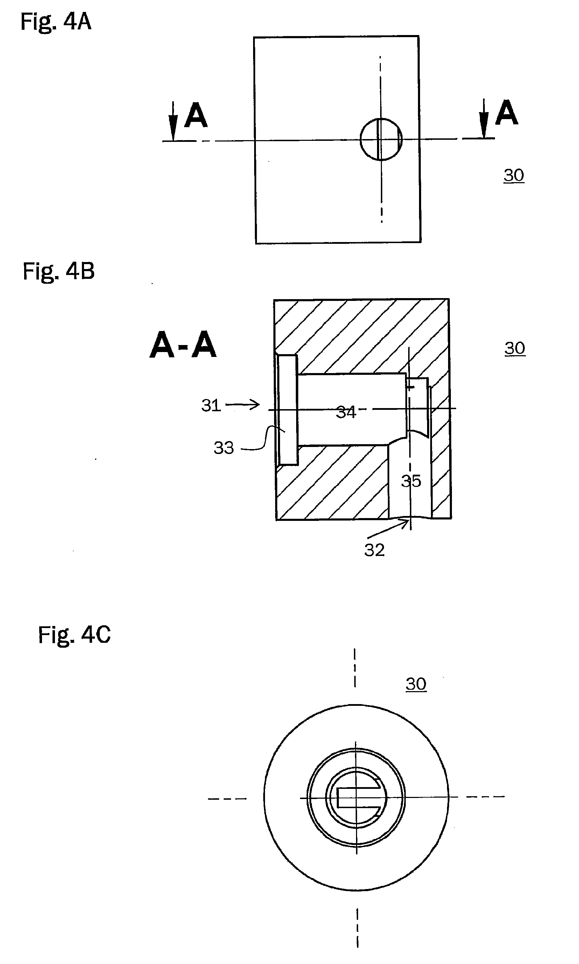

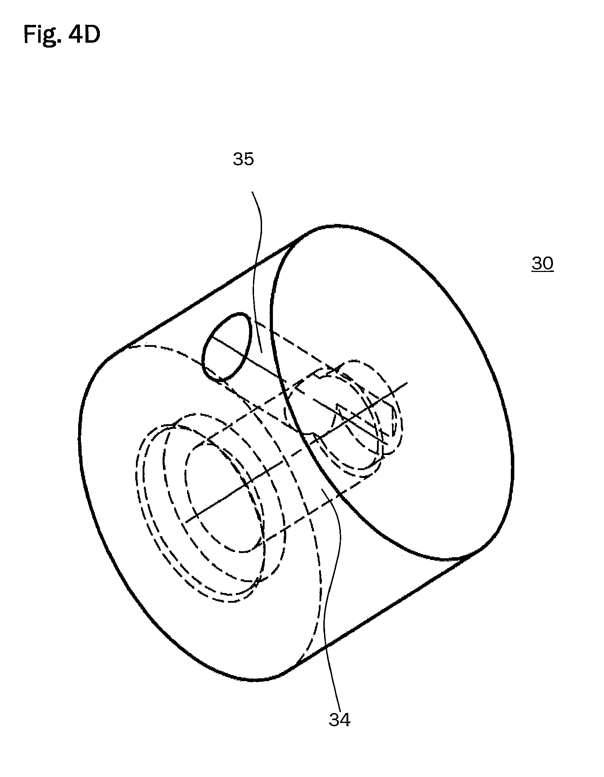

Die in den Fig. 3A und 3B gezeigte Filterkupplungsbuchse 30 ist in den Fig. 4A bis 4D nochmals detaillierter dargestellt. Dabei zeigen die Fig. 4B und 4D nochmals schematisch die im Wesentlichen senkrecht zueinander angeordneten zylinderförmigen Hohlräume 34 und 35, mit unterschiedlichen Durchmessern, die die erste Öffnung 31 mit der zweiten Öffnung 32 verbinden.

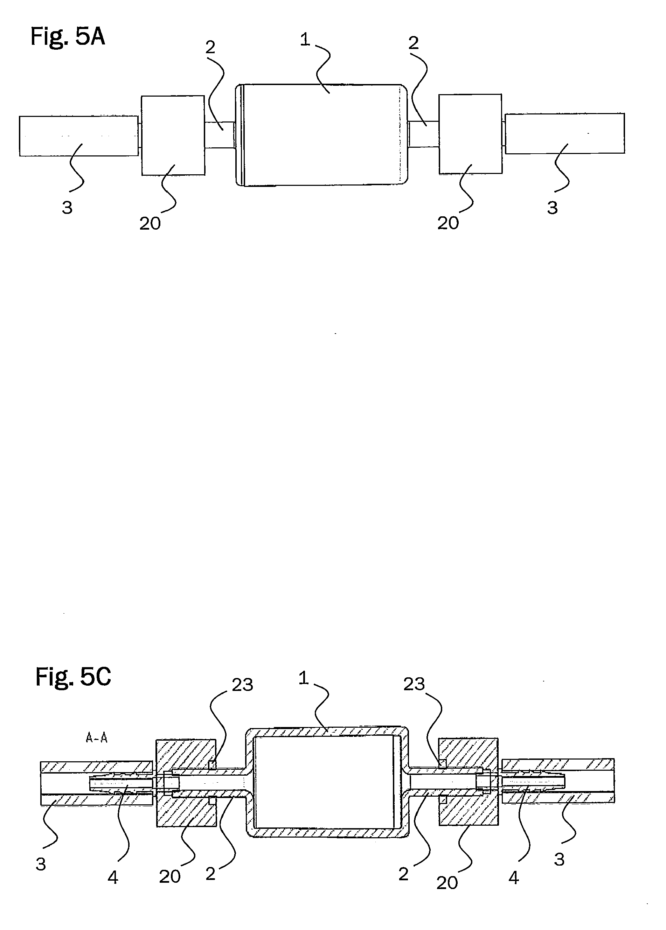

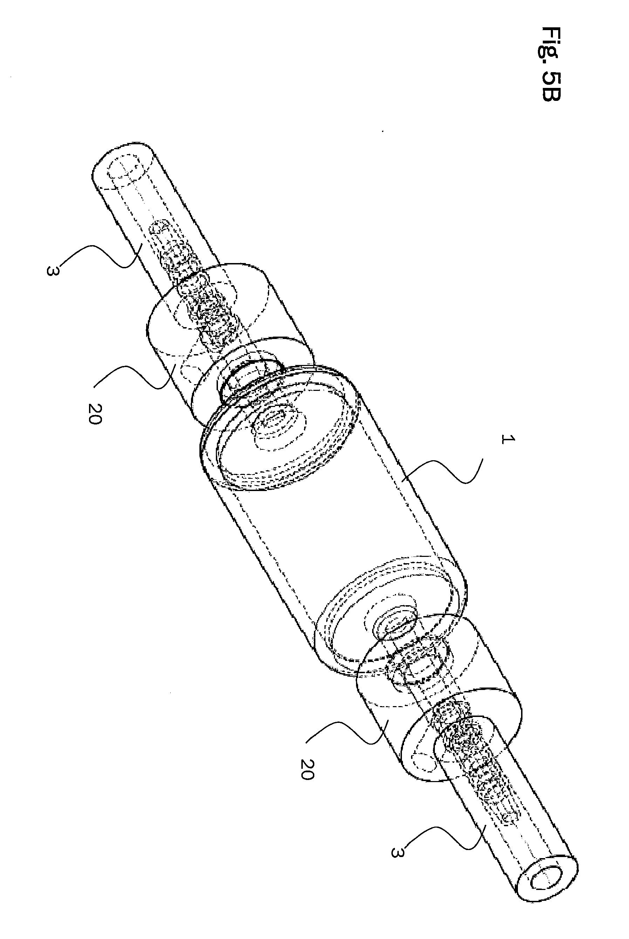

Ein weiteres Ausführungsbeispiel des erfindungsgemäßen Filter-Schlauchsystems ist in den Fig. 5A, 5B und 5C illustriert. Bei dem Ausführungsbeispiel ist der Filter 1 beidseitig mit dem Schlauch 3 über eine Filterkupplungsbuchse 20 verbunden.

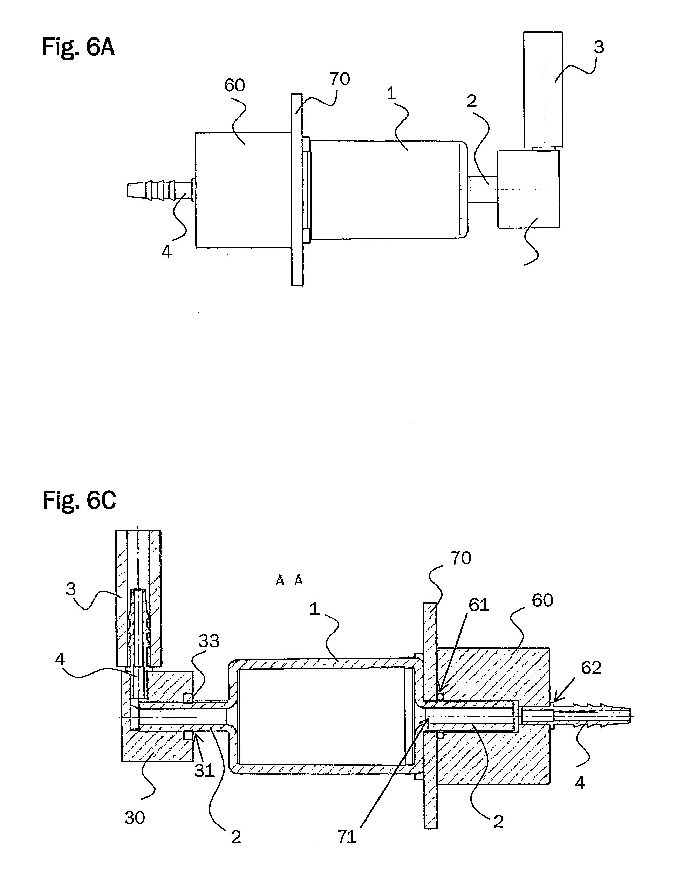

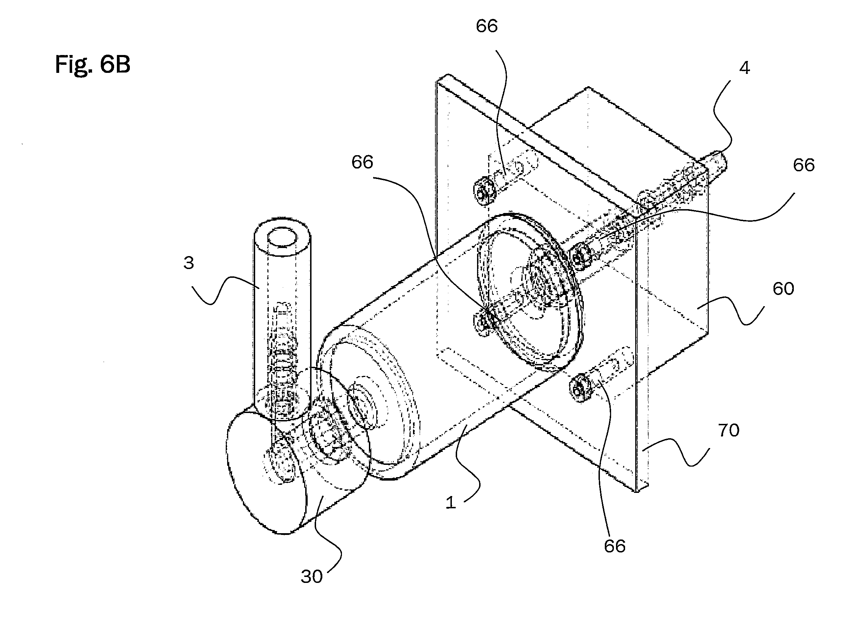

Die Fig. 6A, 6B und 6C zeigen ein weiteres Ausführungsbeispiel zur Realisierung eines verschraubten Filter-Schlauchsystems. Hierbei ist die Filterkupplungsbuchse 60 an ihrer dem Filter zugewandten Seite mit vier Bohrungen 66 versehen. Damit kann die Filterkupplungsbuchse 60 leicht auf eine Blechwand 70 mittels der Bohrungen 66 montiert werden. Bei der Blechwand 70 kann es sich auch um die Gehäusewand eines Messgeräts, insbesondere eines Abgasmessgeräts, handeln, so dass die Filterkupplungsbuchse 60 im Gehäuseinneren mit der Gehäusewand 70 verschraubt werden kann. Bei Vorhandensein einer entsprechenden Gehäuseöffnung 71 in der Blechwand 70 an der Stelle der ersten Öffnung 61 der Filterkupplungsbuchse 60 kann dann der Filter an der Außenseite des Gehäuses 70 durch die Gehäuseöffnung 71 in die Filterkupplungsbuche 60 gesteckt werden. Somit ist der Filter vorteilhaft mit dem Gehäuse verbunden und kann gleichzeitig von außen leicht gewechselt werden, ohne das Gehäuse zu öffnen.

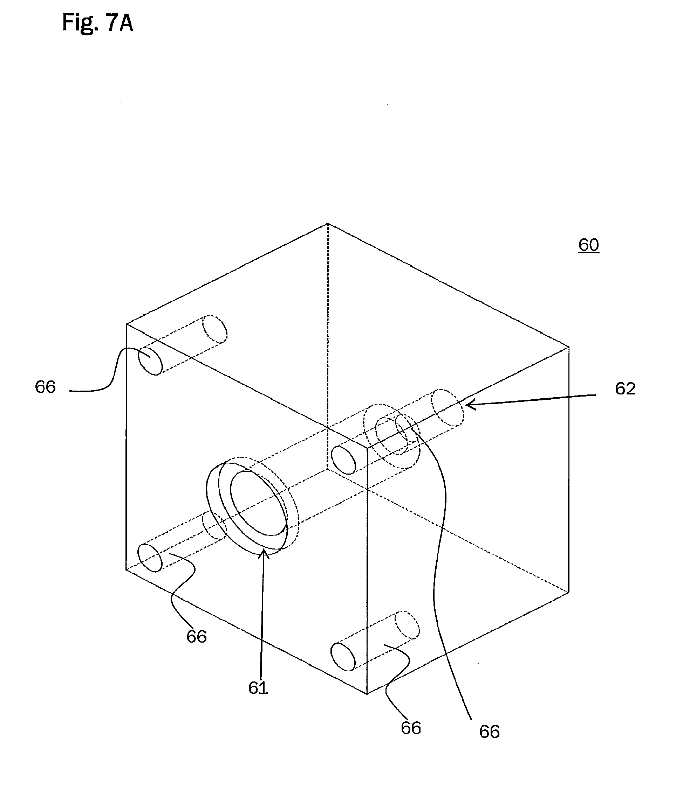

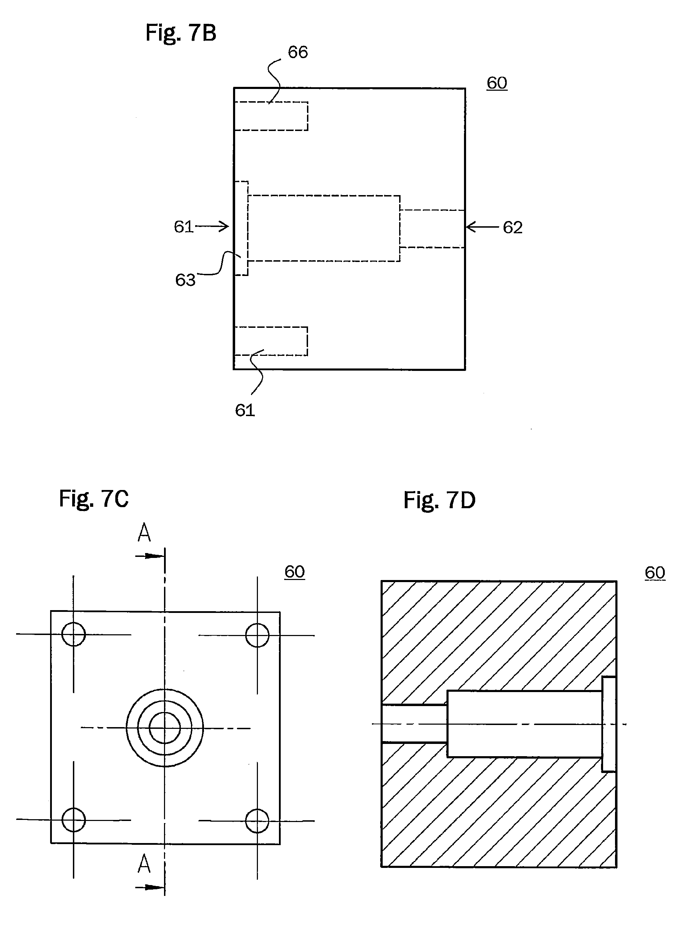

Die Filterkupplungsbuchse 60 dieses Ausführungsbeispiels ist detaillierter in den Fig. 7A, 7B, 7C und 7D in verschiedenen Ansichten dargestellt. In diesen Ansichten sind nochmals die Bohrungen 66 sowie die zwei miteinander verbundenen Hohlräume mit unterschiedlichen Durchmessern erkennbar, die die erste Öffnung 61 mit der zweiten Öffnung 62 verbinden.

Die einzelnen Merkmale der Erfindung sind selbstverständlich nicht auf die beschriebenen Kombinationen von Merkmalen im Rahmen der vorgestellten Ausführungsbeispiele beschränkt und können in Abhängigkeit vorgegebener Vorrichtungsparameter auch in anderen Kombinationen eingesetzt werden. Insbesondere ist das erfindungsgemäße Filter-Schlauchsystem nicht auf ein Filter-Schlauchsystem für ein Abgasmessgerät beschränkt, sondern kann als Filter-Schlauchsystem in unterschiedlichsten Anwendungsbereichen eingesetzt werden, um eine schnelle, werkzeugfreie Wechselung des Filters ohne Beschädigung der Anschlussschläuche zu ermöglichen.

## Patentansprüche

1. Filter-Schlauchsystem zum lösbaren Verbinden eines Filters mit einem Schlauch, umfassend:
- einen Schlauch (3);
- einen Schlauchverbinder (4);
- einen Filter (1) mit einem Anschlussabschnitt (2); und
- eine Filterkupplungsbuchse (20; 30; 60) mit einer mit einem Dichtelement (23; 33; 63) versehenen ersten Öffnung (21; 31; 61) zur Aufnahme des Anschlussabschnitts (2) und einer zweiten Öffnung (22; 32; 62) zur Aufnahme des Schlauchverbinders (4);
wobei der Anschlussabschnitt (2) des Filters (1) mit der ersten Öffnung (21; 31; 61) der Filterkupplungsbuchse (20; 30; 60) eine lösbare Steckverbindung bildet und der Schlauch (3) über den Schlauchverbinder (4) mit der zweiten Öffnung (22; 32; 62) der Filterkupplungsbuchse (20; 30; 60) verbunden ist.

2. Filter-Schlauchsystem nach Anspruch 1, **dadurch gekennzeichnet, dass** die erste Öffnung (21; 31; 61) der Filterkupplungsbuchse eine eingefräste Vertiefung zur Aufnahme des Dichtelements (23; 33; 63) aufweist und das die zweite Öffnung (22; 32; 62) ein eingeschnittenes Gewinde zur Aufnahme des Schlauchverbinders (4) aufweist.

3. Filter-Schlauchsystem nach Anspruch 1 oder 2, **dadurch gekennzeichnet, dass** die Filterkupplungsbuchse (20; 30; 60) aus Kunststoff ist.

4. Filter-Schlauchsystem nach zumindest einem der vorangehenden Ansprüche, **dadurch gekennzeichnet, dass** die Filterkupplungsbuchse (30) zwei zueinander im wesentlichen senkrechte und miteinander verbundene zylinderförmige Hohlräume (34, 35) aufweist um die erste (31) mit der zweiten Öffnung (32) zu verbinden.

5. Filter-Schlauchsystem nach zumindest einem der vorangehenden Ansprüche, **dadurch gekennzeichnet, dass** die Filterkupplungsbuchse (20; 30; 60) zwei miteinander verbundene Hohlräume aufweist um die erste (21; 31; 61) mit der zweiten (22; 32; 62) Öffnung zu verbinden, wobei der Durchmesser des Hohlraums, der an der ersten Öffnung (21; 31; 61) beginnt, größer ist als der Durchmesser des Hohlraums der an der zweiten Öffnung (22; 32; 62) beginnt.

6. Filter-Schlauchsystem nach zumindest einem der vorangehenden Ansprüche, **dadurch gekennzeichnet, dass** der Filter (1) ein Inline-Papier-, Aktiv-Kohler-, oder HEPA-Filter ist.

7. Filter-Schlauchsystem nach zumindest einem der vorangehenden Ansprüche, **dadurch gekennzeichnet, dass** die Filterkupplungsbuchse (60) an der Seite der ersten Öffnung (61) Bohrungen (66) aufweist.

8. Filter-Schlauchsystem mit einem Inline-Filter (1) und zwei Anschlussabschnitten (2) als Filtereingang und Filterausgang, wobei der Filtereingang lösbar mit einem ersten Schlauch (3) gemäß einem Filter-Schlauchsystem der Ansprüche 1-7 verbunden ist und/ oder der Filterausgang lösbar mit einem zweiten Schlauch (3) gemäß einem Filter-Schlauchsystem der Ansprüche 1-7 verbunden ist.

9. Abgasmessgerät mit einem Filter-Schlauchsystem nach Anspruch 7, **dadurch gekennzeichnet, dass** die Filterkupplungsbuchse (60) über die Bohrungen (66) an die Innenseite eines Gehäuses (70) des Abgasmessgeräts geschraubt ist; das Gehäuse (70) an der Stelle der ersten Öffnung (61) eine Gehäuseöffnung (71) aufweist; und der Filter (1) an der Außenseite des Gehäuses (70) des Abgasmessgeräts durch die Gehäuseöffnung (71) in die Filterkupplungsbuchse (60) gesteckt ist.

10. Abgasmessgerät mit einem freiliegenden Filter-Schlauchsystem gemäß einem der vorangehenden Ansprüche 1-8.
